Europäisches Patentamt

European Patent Office

Office européen des brevets

(11) Publication number: **0 303 707**
A1

# EUROPEAN PATENT APPLICATION

published in accordance with Art. 158(3) EPC

(21) Application number: 88901914.7

(22) Date of filing: 17.02.88

Data of the international application taken as a basis:

(86) International application number:
PCT/JP 88/00161

(87) International publication number:
WO 88/06286 (25.08.88 88/19)

(51) Int. Cl.⁴: **G 01 N 21/75**, G 01 N 35/02

(30) Priority: 20.02.87 JP 35877/87
23.12.87 JP 323774/87

(43) Date of publication of application: **22.02.89**
**Bulletin 89/8**

(84) Designated Contracting States: **AT BE CH DE FR GB IT LI LU NL SE**

(71) Applicant: **NITTEC CO., LTD., 13-14,
Nakamachi 4-chome, Koganei-shi, Tokyo 184 (JP)**

(72) Inventor: **WAKATAKE, Koichi, 8-7, Maeharacho 2-chome
Koganei-shi, Tokyo 184 (JP)**
Inventor: **FUJIOKA, Hidehiko, 9-23-205, Ochiai 5-chome
Tama-shi, Tokyo 206 (JP)**

(74) Representative: **Glawe, Delfs, Moll & Partner
Patentanwälte, Postfach 26 01 62 Liebherrstrasse 20,
D-8000 München 26 (DE)**

(54) OPTICAL MEASUREMENT METHOD AND APPARATUS THEREFOR IN AUTOMATIC ANALYZER.

(57) In an optical measurement method of an automatic analyzer (A) for performing biochemical analysis and immunological analysis by rotating step-wise a reaction tube holder (2) holding a predetermined number of reaction tubes (1) and measuring optically the state of the chemical reaction between a sample and a reagent inside each reaction tube (1) at an optical measurement position (C), the present invention converts the measuring light λ to a single-wavelength light corresponding to the measurement item by a grating (23) controlled by rotation means (24) for reciprocation and rotation, and the optical transmissivity of the air layer and the reaction solution is measured optically by this single-wavelength light using a so-called 'pre-spectral system'. In the optical measurement system, the 'pre-spectral system' describe above represents the method which converts measuring light to the single-wavelength light corresponding to the measurement item by a filter and radiates this light before the reaction tube containing the reaction solution (the solution in a state where the sample and the reagent corresponding to the measurement item are undergoing a chemical reaction) reaches the optical measurement position, in order to measure its absorbancy.

SPECIFICATION

METHOD AND APPARATUS FOR OPTICAL MEASUREMENT

IN AUTOMATIC ANALYSIS APPARATUS


TECHNICAL FIELD

The present invention relates to a method and apparatus for optical measurement suitable for automatic analysis apparatus for performing biochemical analysis and immunological analysis and in particular to a quite novel method and apparatus for optical measurement dependent upon a so-called pre-spectrophotometric system.


BACKGROUND ART

In automatic analysis apparatus for biochemical analysis and immunological analysis, well-known means for measuring reactant solutions involve optical measurement based on a so-called pre-spectrophotometric system and that based on post-spectrophotometric system.

The pre-spectrophotometric system depends on the principle that light to be measured is converted to the single wavelength light corre-sponding to the test item by means of a filter before a reaction vessel containing a reaction solution (which here-inafter refers to a solution in which a reagent correspond-ing to the specimen and test items) has

- 1 -

reached a position for optical measurement whereby the absorbance is determined.

There is a problem, however, in that replacement of the filter in accordance with the test items is necessary before the reaction vessel is arrived the measurement position in the above-described, optical method based on the pre-spectrophotometric system, resulting in the hourly number of treatment which is much smaller than that performed by the post-spectrophotometric method because speeding-up of the transfer of the reaction vessel is difficult.

Furthermore, the optical measurement by means of the conventional pre-spectrophotometric system has problems in that the number of filters restricts the test items and the time-course variation in the filter may deteriorate the precision of measurements.

In contrast, the optical measurement by means of the post-spectrophotometric system is based on the principle that a reaction vessel which has arrived a optical measurement position is irradiated with full wavelength light to be measured when the reaction vessel holded by a rotating reaction vessel holder traverses the position whereby the transmitted light is divided into a spectrum by means of a grating (a light disperser) to measure the absorbance of a necessary wavelength.

The advantages of the optical measurement of the post-spectrophotometric system are high-speed measurability of the conditions of the chemical reactions of all the reaction solutions retained by a reaction vessel holder, measurability of the time-course of the respective reaction solutions, and correctability of the time-course variation in the brightness of the light source in measurement and the blank value of the transmitted light passing through the reaction vessel by means of two-wavelength measurement, resulting in very high reliability about measurement precision.

Irrespective of many advantages in optical measurement based on the conventional post-spectrophotometric system, a photolytic reaction may be brought about by a wavelength other than the wavelength to be measured because of some components of allergic specimen and reagents on account of the full wavelength light irradiated with the reaction solution, resulting in a fatal problem of the development of the scattering of measurements between the respective reaction solutions and the concomitant unreliability about the measurement precision.

The conventional post-spectrophotometric method has also a problem of the limited width of a receiving element for receiving light of the respective wavelengths divided by gratings, rendering the selection of light having a wave-

- 3 -

length near and smaller than the width impossible.

In addition, the above post-spectrophotometric method has required very complicated apparatus and control and the resultant expensive apparatus because optical current/voltage converter circuits according to the number of the wavelengths to be measured, e.g., 12 circuits for 12-wavelengths are needed for measurement, on account of the light to be measured which transmits the reaction vessel does not have a single wavelength.

The present invention is proposed in view of the above circumstances. The first object of the present invention is to apply a pre-spectrophotometric system other than the filter system, the former system which produces no photolysis because of any light of a wavelength other than the light of the wavelength to be measured, to a method for optical measurement in an automatic analysis apparatus. The second object of the present invention is to ensure the correctability of the difference of the transmitted light caused by the time-course variation in the brightness of the light source and against a reaction vessel. The third object of the present invention is to provide a method for optical measurement in a quite novel automatic analysis apparatus having only the advantages of both a so-called pre-spectrophotometric system and a post-spectrophotometric system in which the optical measurement device is greatly

- 4 -

simplified for enabling reduction of the costs thereby being capable of substantial improvement in reliability about the measurement precision, continuous measurement can be performed by light of all wavelengths, and the measurement speed is not different from conventional optical measurement based on the post-spectrophotometric system.

## DISCLOSURE OF THE PRESENT INVENTION

In order to achieve the above-described objects, the present invention is characterized in that a reaction vessel holder holding a desired number of reaction vessels is rotated, the light to be measured is converted to light of a single wavelength according to the test item by means of a grating subjected to reciprocating pivotal rotation-derived control through the intermediary of rotation means on the promise that the optical measurement of the automatic analysis apparatus is so constructed as to optically measure the state of the chemical reactions of the specimen and the reagent in the respective reaction vessels at positions at which optical measurement is performed, and the optical transmittances of the air layer and the reaction solution are optically measured by the light of the single wavelength.

In order to realize the above method, the present invention is characterized in that, in the optical measure-

- 5 -

00303707

ment device of an automatic analysis apparatus provided with a reaction vessel holder containing a desired number of reaction vessels, driving means for rotating the reaction vessel holder, and an optical measurement device for measuring the absorbances of the reaction vessels which traverse the optically measuring position by the rotation of the reaction vessel holder, the light to be measured of the optical measurement device is divided into a light of a single wavelength according to the test item, before irradiation of the reaction vessels, by means of a grating subjected to a reciprocating pivotal rotation-derived control because of rotation means; and the air layer and the reaction vessels are irradiated with the selected single wavelength light to compare the optical transmittance of the air layer with that of the reaction solution thereby performing colorimetric, optical measurement.

In optical measurement in the automatic analysis apparatus of the present invention, as the advantages of the post-spectrophotometric system photolysis occurred by transmission of any light of a wavelength other than the light of the wavelength to be measured found in the so-called post-spectrophotometric system can be avoided by the so-called pre-spectrophotometric system, and the differences in the transmitted light for every reaction-vessel can be corrected by pre-measuring the optical transmission of the

- 6 -

reaction vessel containing clean water by means of the single wavelength according to the test item prior to the measurement of the state of chemical reactions at a optically measuring position. As the additional advantage of the post-spectrophotometric system, variations in the brightness of the light source can also be corrected by the air blank value of light which transmitted the air layer just in front of the optically measuring position. For the above-described reasons, highly precise and reliable measurements of reaction solutions can be obtained.

In the present invention to which a so-called pre-spectrophotometric system is applied, only one optical current/voltage conversion circuit suffices for measurement because the light to be measured which transmits the reaction vessels in light of a single wavelength, so that the optical measurement device can be simplified to a great extent.

BRIEF DESCRIPTION OF THE DRAWINGS

Fig. 1 is a diagram illustrating the outline of the mechanism showing one example of an automatic analysis apparatus to which the present invention is applied;

Fig. 2 is a circuit diagram illustrating the signal treatment system of the optical measurement device in the automatic analysis apparatus;

Fig. 3 is a diagram describing the irradiated condition of single wavelength light selected by the present invention;

Figs. 4 (A) to (C) are diagrams successively illustrating the transferred condition of a reaction vessel to the single wavelength light; and

Fig. 5 is a graph showing the respective absorbances when the single wavelength light transmitted a reaction vessel containing clean water and it transmitted the air layer.

BEST EMBODIMENT FOR EFFECTING THE PRESENT INVENTION

The present invention is described in detail hereinafter based on one embodiment given in the accompanying drawings.

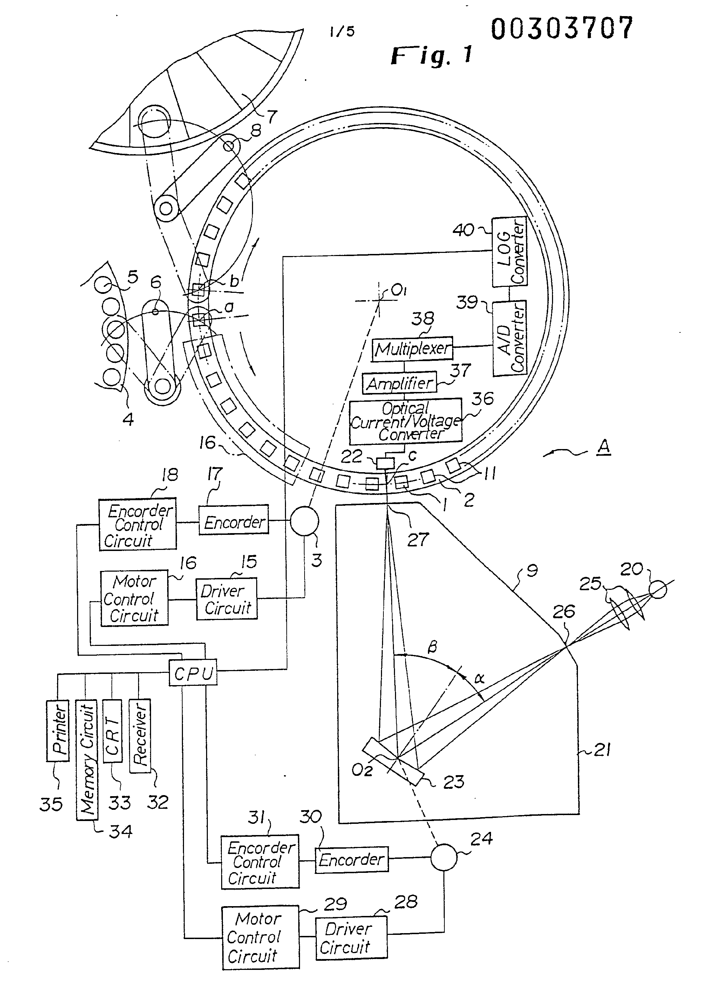

As shows in Fig. 1, the automatic analysis apparatus A in described in the embodiment is composed of a reaction vessel holder 2 containing 40 reaction vessels 1 in the form of a bottomed quadrangular prism, a pulse motor 3 for rotatably transferring the reaction vessel holder 2 at an angle corresponding to 39 containers counterclockwise with respect to Fig. 1, a specimen pipet for withdrawing an aliquot of a specimen from the inside of the specimen container 5 of a sampler 4 and then delivering into the reaction vessel 1 at a specimen dividing position a, a reagent pipet 8 for withdrawing an aliquot of a reagent corresponding to the test item from the inside of the reagent container 7 and then delivering into the reaction vessel 1 at a reagent dividing position, an optical measurement device 9 dispose in an optical measurement position C, and a cleaning device 10 for discharging and cleaning reaction solution which completed optical measurement.

The reaction vessel holder 2 is so constructed that the reaction vessel 1 into which a desired quantity of the specimen is placed by the pulse motor 3 at the specimen dividing position a is rotatably transferred by 351° (corresponding to 39 containers) counterclockwise with regard to Fig. 1, as described above, and consequently the reaction vessel 1 is intermittently transferred for every container clockwise with regard to Fig. 1. It is needless to say, the present invention may be applied to an automatic analysis apparatus which is so constructed as to rotatably transfer the reaction vessel 1 by 369° (corresponding to 41 containers) clockwise with respect to Fig. 1. A horizontally piercing light-transmiting hole 12 is provided between the respective reaction vessels-holding holes 11 and 11 of the reaction vessel holder.

The reaction vessels-holding holes 11 are, of course, provided with horizontally pierced measurement holes 14 and 14 which transmits light to be measured.

- 9 -

The pulse motor 3 for rotating the reaction vessel holder 2 thus constructed is drivingly controlled, at a constant speed, by a driver circuit 15 and a motor control circuit 16 operated by a control device CPU and the direction and angle of rotation are accurately controlled by an encoder 17 and an encoder control circuit 18 for performing high-speed positioning control. The pulse motor 3 may, of course, be substituted for a servo motor.

The optical measurement device 9 is, as shown in Fig. 1, composed of a light source 20, a monochrometer 21, and a light-receiving element 22 and the grating 23 of the monochrometer 21 is so constructed as to perform reciprocating rotation at a definite timing in the range of a definite angle by means of the pulse motor 24.

Accordingly, the full wavelength light irradiated from the light source 20 is condensed by a group of lenses 25 and then irradiated from the incidence slit 26 of the monochrometer 21 to the grating 23, which is so constructed as to apply only the light to be measured, reflected at an angle which reflects the single wavelength light corresponding to the test item, from a reflection slit 27 to the light-receiving element 22.

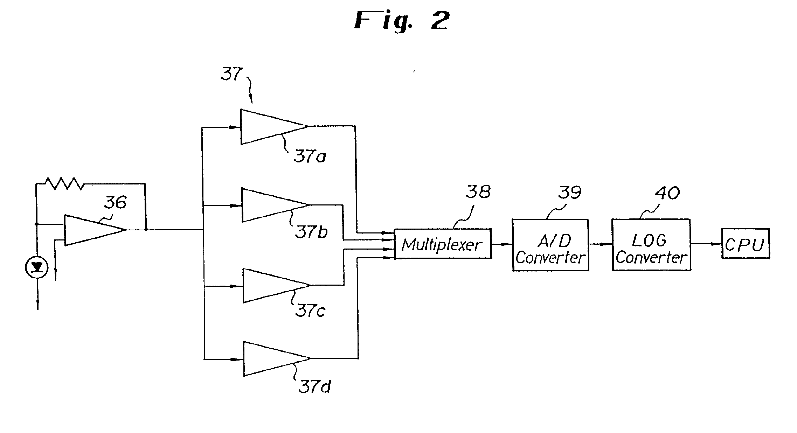

The single wavelength light applied to the light-receiving element 22 is, as shown in Fig. 2, applied specially to an optical current/voltage converter circuit 36

- 10 -

and then applied to either one of two or more (four in the 00303707 embodiment) of amplifiers 37 which amplify the grouped wavelength light for every wavelength to be measured thereby being amplified to a predetermined voltage. The measuring voltage valve amplified by the amplifier 37 is then applied to an LOG converter 40 from and A/D converter 39 via a multiplexer 38 and subjected to necessary calculation processing by the control device CPU thereafter.

Although the above-described case where the light to be measured applied to the optical current/voltage converter circuit 36 was divided into four groups for every wavelength to be measured, the one or more group may saffice in the present invention. When the number of the groups is plural, grouping may be made according to the magnitude of the absorbance.

For example, light in wavelength regions at 340 to 380 nm, 410 to 500 nm, 500 to 600 nm, and 600 to 750 nm is amplified by amplifiers 37a, 37b, 37c, and 37d, respectively, and is then selected by the multiplexer 38. Such a process is desirable in view of resolution.

When the light to be measured is divided into four groups as described above and the output of the amplifier 37 is composed by a 16-bit A/D converter 39, variation of about 0.15 m V absorbance can be detected for every group when liquot quantity of 100% is made 10 V, so that very reliable

- 11 -

measurement data can be obtained.

The pulse motor 24 for rotating the grating 23 is subjected to reciprocal, rotational control at a constant speed by means of a driver circuit 28 and a motor control circuit 29 operated by the control device CPU and the direction and the angle of rotation thereof is accurately controlled by an encoder 30 and an encoder control circuit 31 for performing high-speed positioning control. In Fig. 1, codes 32, 33, 34, and 35 denote a receiving key, a CRT, a memory circuit, and a printer, respectively.

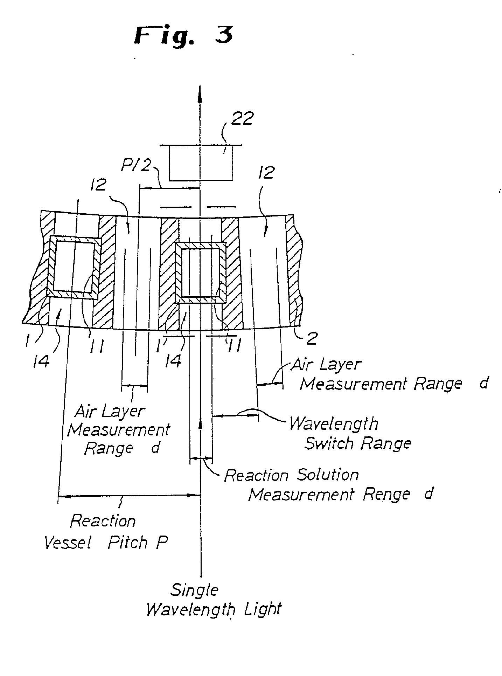

Based on the above premise, the principles of selection and irradiating action of single wavelength light according to a test item are described with reference to Fig. 3.

If the time required to one rotation of the reaction vessel holder 2 is

$$T \text{ sec } (= T \times 10^3 \text{ m sec}),$$

the passing time and distance in the air layer measurement range and the reaction tube measurement range are $T_1$ sec and d mm,
the wavelength switching time is $t_2$ sec,
the pitch of the reaction vessel 1 is P mm, and
the number of the reaction vessel 1 is n,

then        $t_1 = \dfrac{T \times 10^3 \times d}{P \times m}$ m sec                              and

$t_2 = \dfrac{T \times 10^3}{P \times n} (\dfrac{P}{2} - d)$ m sec

because the time needed for one rotation of the reaction vessel holder 2, or the time needed for the length of the central circumference of the reaction vessel P x n (mm) is T sec.

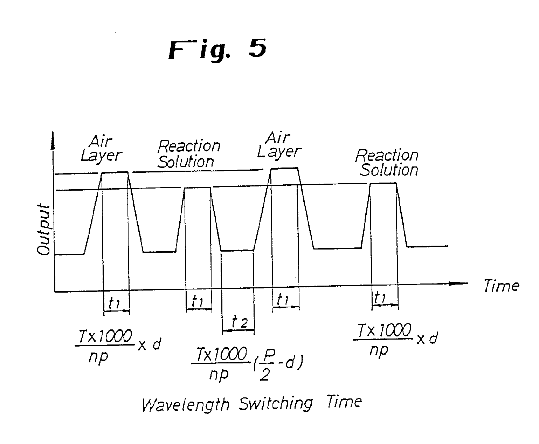

Accordingly, the wavelength switching control corresponding to the switch wavelength of the grating 23 may, as is given in Fig. 5, be performed within $t_2$ m sec.

Because the needed wavelength light is about 340 to 750 nm in a biochemical automatic analysis apparatus, light in the maximal wavelength of 410 nm which is divided by the grating 23 into spectrum may suffice the purpose.

When the monochrometer 21 is equipped with a concave grating 23, the angles $\alpha$ and $\beta$ of the necessary wavelength removed from the reflection slit 27 are calculated by the equation

$mn\lambda = \sin\alpha + \sin\beta$

where : wavelength.(nm); n: the number of degrees; n: the number of grooves per 1 mm; $\alpha$: incident angle; and $\beta$: reflection angle. Based on the results of the calcu-

- 13 -

00303707

lation, the rotational speed of the pulse motor 24 may be controlled and the encoder 29 may perform positioning control.

When the wavelength of the light $\lambda_1$ corresponding to the test item for the reaction vessel 1 which approached the optical measurement position C is selected, measurement of the reaction solution because of the wavelength of light' $\lambda_1$ corresponding to the test item is carried out as follows.

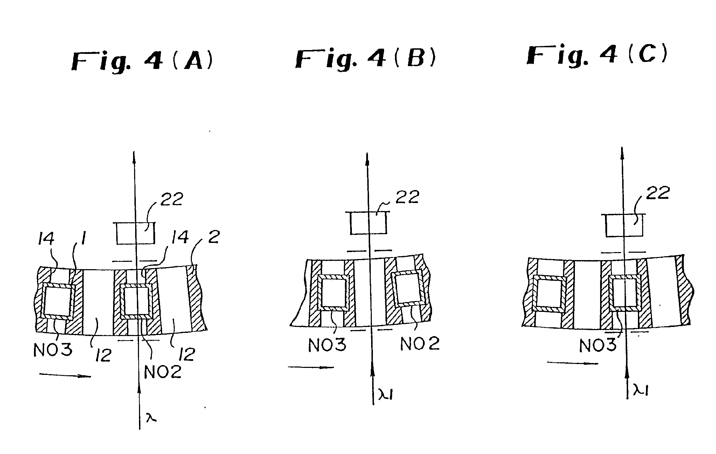

As shown in Fig. 4 (a), rinsing water is placed in a reaction vessel No. 3 in which the reaction solution is to be contained at the final stage in a cleaning device 10. It is regarded as the optical measurement of a reaction vessel No. 2 being performed at the optical measurement position.

The reaction vessel No. 3 in which the rinsing water is placed is, as given in Fig. 4 (b), transferred counterclockwise. The optical measurement 9 measures the transmittance $(T_{3B})$ of light which transmitted the light-transmitting holes 12 before the reaction vessel No. 3 has approached the optical measurement position C and then measures, as given in Fig. 4 (c), the optical transmittance $(T'_{3B})$ when the reaction vessel No. 3 has passed the optical measurement position C. Based on both optical transmittances, the absorbance of the blank of the reaction vessel $OD_{3B}$ immediately before measurement for the reaction vessel No. 3 is

- 14 -

obtained by the following equation and caused to memorize in the control circuit CPU.

$$OD_{3B} = \log \frac{1}{T'_{3B}} - \log \frac{1}{T_{3B}} = \log \frac{T_{3B}}{T'_{3B}}$$

When the reaction solution formed by chemically reacting a specimen with a first and a second reagent is measured by the wavelength $_1$ of the above test item at the optical measurement position, the absorbance $OD_{30}$ is expressed by

$$OD_{30} = \log \frac{T'_{30}}{T_{30}}$$

For this reason, the absorbance $OD_{30}$ after measurement of the brightness of the light source and the blank values of the respective reaction vessels is

$$OD_{30}' = OD_{30} - OD_{3B}$$

When the absorbance $OD_{30}$ is thus obtained, the absorbance of a standard substance $OD_{ns}'$ is calculated to finally calculate the measurements of the reaction solution.

The absorbance of the standard substance $OD_{ns}'$ is measured by the wavelength of light $\lambda_1$ corresponding to the test item and can be obtained by

$$OD_{ns}' = OD_{ns} - OD_{nB}$$

When the concentration is expressed by $f$, the concentration of $OD_{30}$ $f_{30}$ is

$$f_{30} = \frac{OD_{30} - OD_{3B}}{OD_{ns} - OD_{nB}} \times f = \frac{OD_{30}'}{OD_{ns}'} \times f$$

The value of the chemical reaction (the measurements of the reaction solution is then obtained, and the measurements are applied to the control device CPU, memorized, and finally printed by a printer and the like.

The reason for the calculation of the measurements of the reaction solution in the present invention on the basis of the absorbance of the reaction vessel containing clean water ($T'_{3B}$) and the absorbance of the air layer ($T_{3B}$) is as follows:

In an automatic analysis apparatus in which reaction vessels perform step rotation, the single wavelength measurement of the reaction solution involves very difficult correction of the time-course variation in the brightness of the light source (the intensity of wavelength) and the difference of optical transmittances among the reaction vessels as compared with the optical method of two-wavelength measurement.

In order to solve such inconveniences, the present invention is so constructed as to correct the optical

- 16 -

transmittances among the reaction vessels by correcting the actual measurements of the reaction solution on the basis of the absorbance of a reaction vessel containing cleaning water ($T'_{3B}$) to obtain the absorbance of the air layer ($T_{3B}$) thereby correcting the time-course variation in the brightness of the light source (wavelength intensity) to maintain reliability about measurement precision.

## POSSIBILITY OF INDUSTRIAL APPLICATION

Because the method for optical measurement in the automatic analysis apparatus in the present invention is composed as described above, photolysis caused by transmission of light of a wavelength other than that to be measured found in a so-called post-spectrophotometric system can completely avoided by a so-called pre-spectrophotometric method whereby reliability about measurement precision can be improved to a great extent.

In the present invention, as an advantage of the conventional post-spectrophotometric system, the difference of transmitted light for every reaction vessel can be corrected by measuring the pre-measurement of the optical transmittance of a reaction vessel containing clean water at the single wavelength corresponding to the test item before the measurement of the state of chemical reactions at a position of optical measurement.

Because variation in the brightness of a light source can be corrected, in the present invention, based on the air blank value of light which transmitted the air layer immediately in front of the optical measurement position, highly reliable measurements of a reaction solution can be obtained by automatic analysis with high precision and the memory capacity of the control device can be made much smaller than that of a conventional automatic analysis apparatus in which the whole reaction vessels are measured with full wavelength light for obtaining blank values and memorized. As an example, conventional automatic analysis apparatus must memorize as many as 450 data for measuring the blank values of 30 reaction vessels at light of 15 wavelengths, whereas the apparatus in the present invention requires memory of only one datum, enabling substantial miniaturization of the memory capacity of the control device and drastic reduction of costs.

In the present invention which adops a so-called pre-spectrophotometric system, only one optical current/voltage converter circuit may suffice because the light to be measured which transmits the reaction vessels is single wavelength light, so that the present invention displays much excellent effectiveness such as wide range simplification of optical measurement devices.

00303707

WHAT IS CLAIMED IS:

1. Method for optical measurement in an automatic analysis apparatus which comprises rotating a reaction vessel holder in which a required number of reaction vessels are holded and optically measuring the state of the chemical reactions of the specimen and the reagent in said respective reaction vessels; the light to be measured being converted to light of a single wavelength corresponding to the test item by means of a grated subjected to reciprocating pivotal contal because of rotation means, and the optical transmittances of the optical layer and the reaction solution being optically measured by said single wave light.

2. A method for optical measurement in an automatic analysis apparatus in accordance with Claim 1 wherein the correction of the brightness of the power source for the measurements of said reaction solution and the correction of the difference in optical transmittances among the reaction vessels are performed based on the optical transmittances measured by said single wavelength light in immediate front of a position at which optical measurement is performed and the optical transmittance of the same reaction vessel containing cleaning water.

3. A method for optical measurement in an automatic analysis apparatus in accordance with either Claim 1 or Claim

- 19 -

2 wherein said wavelength to be measured is divided into a plurality of groups and the light to be measured which is applied to an optical current/voltage converter device is amplified by amplifiers disposed for every wavelength group thereby being applied to a multiplexer.

4. A device for optical measurement in an automatic analysis apparatus provided with a reaction vessel holder holding a required number of reaction vessels therein, driving means for rotating the reaction vessel holder, and an optical measurement device for measuring the absorbances of the reaction vessels which traverse the position of optical measurement by means of the rotation of said reaction vessel holder; a single wavelength corresponding to the test item being selected by a grating which is subjected to reciprocating pivotal rotation by means of rotation means before the reaction vessels has been irradiated with the light to be measured of said optical measurement device, and the air layer and the reaction vessels being irradiated with the selected single wavelength light thereby comparing the transmittance of said air layer with that of the reaction solution to perform colorimetric, optical measurement.

5.  A device for optical measurement in an automatic analysis apparatus in accordance with Claim 4 wherein the correction of the brightness of the light source for the measurements of said reaction solution and the correction of the difference in optical transmittances among the reaction vessels are performed based on the optical transmittance of the air layer measured by said single wavelength light and that of the same reaction vessel containing cleaning water.

6.  A device for optical measurement in accordance with either 4 or 5 wherein the wavelength to be measured is divided a plurality of groups and the light to be measured applied to an optical current/voltage converter means is amplified by amplifiers disposed for every wavelength groups thereby being applied to a multiplexer.

**Fig. 1**

00303707

# Fig. 2

# Fig. 3

P/2

22

12

12

Air Layer
Measurement Range   d

Air Layer
Measurement
Range   d

Wavelength
Switch Range

Reaction Solution
Measurement Renge   d

Reaction
Vessel  Pitch P

Single
Wavelength Light

# Fig. 4(A)    Fig. 4(B)    Fig. 4(C)

00303707

# Fig. 5

Air Layer

Reaction Solution

Air Layer

Reaction Solution

Output

Time

$t_1$

$t_1$

$t_2$

$t_1$

$t_1$

$$\frac{T \times 1000}{np} \times d$$

$$\frac{T \times 1000}{np} \left(\frac{P}{2} - d\right)$$

$$\frac{T \times 1000}{np} \times d$$

Wavelength Switching Time

# INTERNATIONAL SEARCH REPORT

**00303707**

International Application No **PCT/JP88/00161**

## I. CLASSIFICATION OF SUBJECT MATTER (if several classification symbols apply, indicate all) 3

According to International Patent Classification (IPC) or to both National Classification and IPC

Int.Cl⁴ _ -. .
G01N21/75, G01N35/02

## II. FIELDS SEARCHED

| Minimum Documentation Searched 4 | |
|---|---|
| Classification System | Classification Symbols |
| IPC | G01N21/75, G01N35/02, G01N21/27 |

| Documentation Searched other than Minimum Documentation to the Extent that such Documents are Included in the Fields Searched 5 | |
|---|---|
| Jitsuyo Shinan Koho | 1926 – 1988 |
| Kokai Jitsuyo Shinan Koho | 1971 – 1988 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | JP, A, 52-66477 (Hitachi, Ltd.) 1. June. 1977 (01. 06. 77) & JP, B, 57-61173 | 1-6 |
| Y | JP, A, 50-18090 (Hitachi, Ltd.) 26. February. 1975 (26. 02. 75) & JP, B, 55-21303 & JP, A, 55-149841 & JP, B, 57-52982 | 1-6 |

* Special categories of cited documents: 18

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| April 14, 1988 (14. 04. 88) | April 25, 1988 (25. 04. 88) |
| International Searching Authority 1 | Signature of Authorized Officer 10 |
| Japanese Patent Office | |